# EUROPEAN PATENT SPECIFICATION

(11) **EP 2 659 161 B1**
(45) Date of publication and mention of the grant of the patent: **27.02.2019**
(21) Application number: 11805656.3
(22) Date of filing: 22.12.2011
(51) Int. Cl.: F16G 5/16

(54) **A TRANSVERSE ELEMENT FOR A DRIVE BELT AND THE DRIVE BELT**
QUERELEMENT FÜR EINEN ANTRIEBSRIEMEN UND ANTRIEBSRIEMEN
ÉLÉMENT TRANSVERSAL POUR COURROIE D'ENTRAÎNEMENT ET COURROIE D'ENTRAÎNEMENT

(30) Priority: 28.12.2010 NL 1038480
(43) Date of publication of application: 06.11.2013
(73) Proprietor: Robert Bosch GmbH, 70442 Stuttgart (DE)
(72) Inventor: VAN HOUT, Antonius Embregt, NL-5663 EV Geldrop (NL); TRAN, Minh-Duc, NL-5348 KX Oss (NL); SCHNACKERS, Jozef Norbertus Mathias, NL-5641 EC Eindhoven (NL); ROMPEN, Guillaume Gerard Hubertus, NL-6151 AA Munstergeleen (NL); PRINSEN, Lucas Hendricus Robertus Maria, NL-5062 LV Oisterwijk (NL); GOMMANS, Frans, NL-5000 AM Tilburg (NL); VAN DEN BERG, Roeland, NL-5000 AM Tilburg (NL); VAN DINTER, Ernst, NL-5000 AM Tilburg (NL)
(74) Representative: Plevier, Gabriël Anton Johan Maria
(86) International application number: PCT/NL2011/000084
(87) International publication number: WO 2012/091545

(56) References cited:
- EP-A1- 0 562 654
- JP-A- 58 054 253
- JP-U- H0 530 590
- JP-U- 59 007 950
- JP-U- 59 079 653
- JP-U- 60 079 039
- JP-U- 62 054 343

## Description

The invention relates to a drive belt for use with a continuously variable transmission having two variable pulleys, each pulley defining a circumferential V-groove. The drive belt is provided with an endless carrier that typically consists of two band sets, each band set comprising at least one, but usually a number of concentrically nested, relatively thin and flat endless metal bands and with a number of metal transverse elements arranged on and in sliding relationship with the band sets. Each transverse element is provided with one or more cut-outs, each cut-out accommodating a respective band set in such a manner that a first part of the transverse element extends below the band set, a second part of the transverse element is situated between the band set and a third part of the transverse element extends above the band set. A drive belt of this type is known from EP-A-0014013.

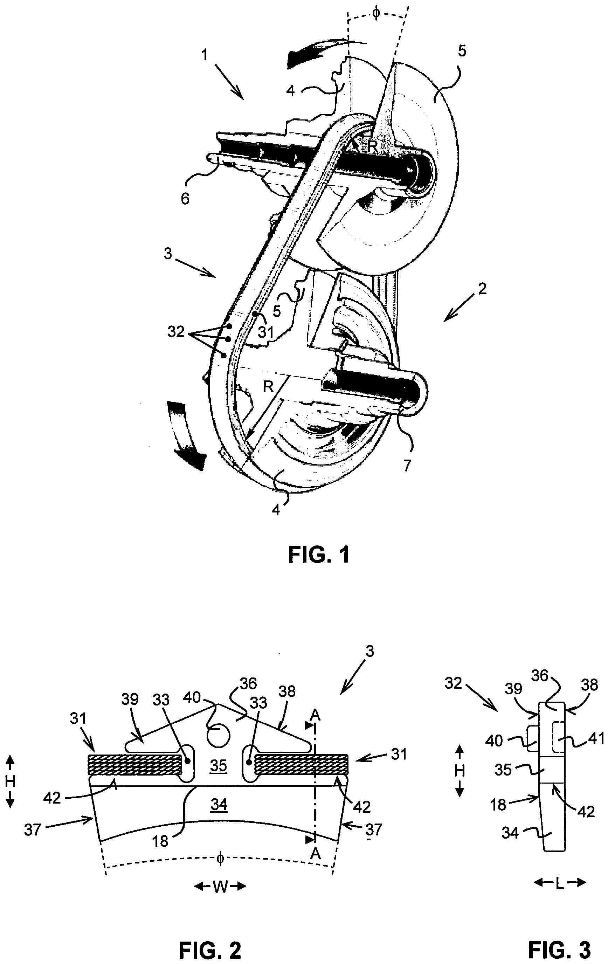

When describing the directions with respect to the drive belt and/or a transverse element thereof, it is always assumed that the transverse element(s) is/are in an upright position, such as is illustrated in Fig. 2 in a front view thereof. In this Fig. 2 the longitudinal or length direction L of the drive belt is at right angles to the plane of the figure. The transverse or width direction W is from left to right and the radial or height direction H is from top to bottom in the plane of Fig. 2.

Specifically at the location of the cut-outs, the outer surface of the transverse elements has to meet certain requirements in order to ensure the continued good operation of the drive belt. For example, during operation of the drive belt in the transmission, the transverse elements are pushed radially outwards against the band sets by the transmission pulleys. As a result, the (radial inside of the) band set is contacted by a radially outwardly facing surface part of the said first part of the transverse element that forms the bottom of the respective cut-out, which surface part is referred to as the bearing surface. The finishing and shape of the bearing surface are known to have a significant impact on the performance and/or durability of the band set and, hence, on the drive belt as a whole. JP 58 054253 A discloses a transverse element according to the preamble of claim 1. For example, it is known from GB-A-2013116, to design the bearing surface as a smooth surface provided with a double convex curvature, that is to say curved both width-wise and in the said length direction. It being understood that the width-wise curvature of the bearing surface is defined in a cross-sectional plane of the transverse element including the width and height directions, i.e. in a cross-section of the transverse element oriented in the length direction, and that the length curvature is defined in a cross-sectional plane of the transverse element including the height and length directions, i.e. in a cross-section of the transverse element oriented in the width direction. This known shape of the bearing surface is supposed to optimally support the band set, at least to maximise a contact area there between, i.e. to minimise a stressing of the band set by the said contact. However, because of the preferred method of manufacturing of the transverse element by blanking, such curved shape of the bearing surface is difficult and costly to provide.
The known transverse element is cut or blanked out of a strip-shaped base material by a cutter that moves through the material in the above-defined length direction of the drive belt. This cutting process does, in principle, not allow for the surfaces that are created therein, such as the bearing surface, to be convexly curved in the cutter movement direction. The said length curvature of the bearing surface thus needs to be created in a further step in the manufacturing process, such as by means of grinding, which adds to the overall complexity and cost of the manufacturing process thereof.

The present invention aims to provide a viable alternative to the above known embodiment of the transverse element, in particular of the bearing surface thereof, that likewise provides a favourable support of and/or contact with the band set. Favourably, such alternative should be realized with a more basic and cost-effective manufacturing process.

According to the invention the above aim is realized by providing the bearing surface of the transverse element with two edges that, at least during operation of the drive belt, arrive in contact with the band set and define a position of local bending thereof, which bearing edges are mutually separated in the length direction of the drive belt over a distance of 40 to 60% and preferably about 50% of the dimension of the transverse element in that direction, i.e. of the thickness thereof. Preferably, at least one of the said two bearing edges is distanced in the length direction of the drive belt from a main face of the transverse element facing in the length direction over a distance of 5 to 35% and preferably about 25% of the thickness of the transverse element. Hereby, according to the invention, a bending stress in the bands of the band set is significantly and favourably reduced.

Whereas, by applying the teaching of GB-A-2013116 a contact stress induced in the band set by the transverse elements contacting it is reduced, the present invention, instead effects a reduction of the bending stress in the band set. This bending stress reduction results from the claimed essentially equal spacing or mutual separation of the subsequent locations of longitudinal bending of the band set, i.e. of the (bearing) edges of the bearing surfaces of the transverse elements.

The present invention relies on a model of the drive belt that takes into account the longitudinal bending thereof, as well as the interaction between its transverse element and band set components. This model revealed that, at least when the said longitudinal curvature of the bearing surface is less than that of the drive belt, e.g. when no or even a concave longitudinal curvature is applied to the bearing surface, the band set mainly bears on two, mutually longitudinally separated edges of the bearing surface. These locations on, i.e. the bearing edges, of the bearing surface are typically located close to a respective main face of the transverse element with only a small transition zone provided there between (which transitions zones are thus not intended to contact the band set). It was found that the tensile stress in the band set during operation of the drive belt was minimised if and when the said bearing edges are mutually equally separated in the length direction of the drive belt, i.e. not only for all of the individual transverse elements of the drive belt, but also between two successive transverse elements.

In it noted that the separation between the bearing edges of two successive transverse elements in the drive belt typically varies in dependence on the local bending radius of the drive belt. However, also typically, such variations amount to about 3% of a thickness of the transverse element only, which is well within the accuracy with which the separation between the bearing edges of one individual transverse element is set and controlled in the manufacturing process. Accordingly, such influence of the bending radius may in most case be ignored. Still, the (additional) separation between the said bearing edges of two successive transverse elements, due to the longitudinal bending of the drive belt, may be included in determining the desired, mutually equal separation of the bearing edges of both individual and adjacent transverse elements in the drive belt.

According to the invention the said two edges of the bearing surface can be created in the overall manufacturing process of the transverse elements in an additional process step. For example, a groove that is oriented in the width direction of the drive belt and that is centrally located on the bearing surface can be created in such process step by etching or by machining.

A favourably way of creating the bearing surface groove is to set certain process parameters of the blanking process such that the cut surface of the transverse element is provided with a comparatively large tear-in zone (German: "Einriss"). Such cut surface at least including the said bearing surface and the groove or tear-in zone being provided therein, located in between two areas of the bearing surface that are formed by shearing and that represent the said two bearing edges in accordance with the invention.

Further, according to the invention, the said two bearing edges of the bearing surface can be created by setting certain process parameters of the blanking process such that the transverse element is provided with a comparatively large contraction zone (German: "Einzug") and tear-off zone (German: "Abriss") that together extend for between 40 to 60% of the thickness of the transverse element. It may for instance be possible to create a contraction zone amounting to 15% and a tear-off zone amounting to 25% of the thickness of the transverse element.

In relation to the above suggested blanking process settings it is noted that as such these are well-known to the person skilled in the art of blanking. For example the blanking process parameters of cutting gap, die angle, blank holding pressure influence the extent of such tear-in, tear-off and contraction zones. As mere examples of such known art it may be referred to the patent publications WO-A-2004/036083, WO-A-2004/111490, EP-A-1158203 and EP-A-1158204.

In order to illustrate the invention, an exemplary embodiment of a drive belt will be described with reference to the drawing, in which:
Fig. 1 provides a schematic perspective view of the continuously variable transmission with a drive belt running over two pulleys;
Fig. 2 shows a cross section of the known drive belt viewed in the longitudinal direction thereof;
Fig. 3 provides a width-wise oriented view of a transverse element of the known drive belt;
Fig. 4, in a simplified view, provides a width-wise oriented view of a section of three transverse elements of the known drive belt;
Fig. 5, in a simplified view, provides a width-wise oriented view of a section of three transverse elements of the drive belt according to the present invention;
Fig. 6 is a graph representing the (modelled) stress in longitudinal direction in an endless band of the known drive belt and of the drive belt in accordance with the present invention; and
Fig. 7 provides a width-wise oriented, schematic cross-section of a bearing surface of the transverse element produced in a manufacturing method in accordance with the present invention.

The schematic illustration of a continuously variable transmission in Fig. 1 shows a drive belt 3 which runs over two pulleys 1, 2 and which includes a closed band set 31 that carries an essentially contiguous row of transverse elements 32 that are arranged over the circumference of the band set 31. In the illustrated position, the upper pulley 1 rotates more quickly than the lower pulley 2. By changing the distance between the two parts, in this case conical discs 4, 5 from which each pulley 1, 2 is composed, the so-called running radius R of the drive belt 3 on the respective pulleys 1, 2 can be changed, as a result of which the speed difference between the two pulleys 1,2 can be varied as desired. This is a known manner of varying a difference in rotational speed between an input shaft 6 and an output shaft 7 of the transmission.

In Fig. 2, the drive belt 3 is shown in a cross section thereof facing in longitudinal direction. This figure shows the presence of two band sets 31 shown in cross-section that carry and guide the transverse elements 32 of the drive belt 3, whereof one transverse element 32 is shown in front elevation in Fig. 2. The transverse elements 32 and the band sets 31 of the drive belt 3 are typically made of metal, usually steel. The transverse elements 32 are able to move, i.e. slide along the length direction L of the band sets 31, so that when a force is transmitted between the transmission pulleys 1, 2, this force is transmitted by the transverse elements 32 pressing against one another and pushing each other forward in a direction of rotation of the drive belt 3 and the pulleys 1, 2.

The band sets 31 hold the drive belt 3 together and, in this particular exemplary embodiment, are composed of five individual endless bands each, which endless bands are mutually concentrically nested to form the band set 31. In practice, the band sets 31 often comprise more than five endless bands, e.g. up to twelve or more.

The transverse element 32, which is also shown in side view in Fig. 3, is provided with two cut-outs 33 located opposite one another and opening towards opposite transverse sides of the element 32. Each cut-out 33 accommodates a respective one of the two band sets 31. A first or base part 34 of the transverse element 32 thus extending radially inwards from or, in height direction H, below the band sets 31, a second or neck part 35 of the transverse element 32 being situated in between and at the same (radial) height of the band sets 31 and a third or head part 36 of the transverse element 32 extending radially outwards or, in height direction H, above the band sets 31. The lower or radially inward side of a respective cut-out 33 is delimited by a so-called bearing surface 42 of the base part 34 of the transverse element 32, which bearing surface 42 faces radially outwards or upwards in the general direction of the head part 36. The bearing surfaces 42 are typically provided with a convex curvature in the width direction W and/or in the length direction L of the drive belt 3. The radii of curvature associated therewith are typically large in relation to the dimensions of the bearing surfaces 42 and, hence, are not discernable in/on the scale of Fig. 2 and 3.

The lateral sides or pulley contact surfaces 37 of the said base part 34 of the transverse element 32 are oriented at an angle φ with respect to one another, which corresponds, at least predominantly, to a V-angle φ defined between the conical discs 4,5 of the transmission pulleys 1, 2 (see Fig. 1).

A first or rear main face 38 of the transverse element 32 facing in the length direction L of the drive belt 3 is essentially flat, while a so-called rocking or tilting edge 18 is provided on an opposite facing, second or front main face 39 of the transverse element 32. In height direction H above the rocking edge 18, the transverse element 32 in side view has an essentially constant thickness and, in height direction H, whereas below the rocking edge 18, said base part 34 tapers towards the bottom side of the transverse element 32. The rocking edge 18 is typically provided in the form of a slightly rounded section of the front main face 39 of the transverse element 32. In the drive belt 3, the front main face 39 of the transverse element 32 arrives in contact with the rear main face 38 of an adjacent transverse element 32 at the location of the rocking edge 18, both in the straight parts of the drive belt 3 stretching between the pulleys 1, 2 and in the curved parts thereof located between the conical pulley discs 4, 5 of the transmission pulleys 1, 2.

The transverse element 32 is also provided with a protuberance 40 on its front main face 39 and a hole 41 in its rear main face 38. The protuberance 40 and the hole 41 of two adjacent transverse elements 32 in the drive belt 3 are mutually engaging in the sense that the protuberance 40 of a first of the adjacent transverse elements 32 is at least partly inserted in the hole 41 of a second one thereof. Hereby, a relative displacement between and/or rotation of the said two adjacent transverse elements 32 is limited to a clearance provided between the said protuberance 40 and hole 41.

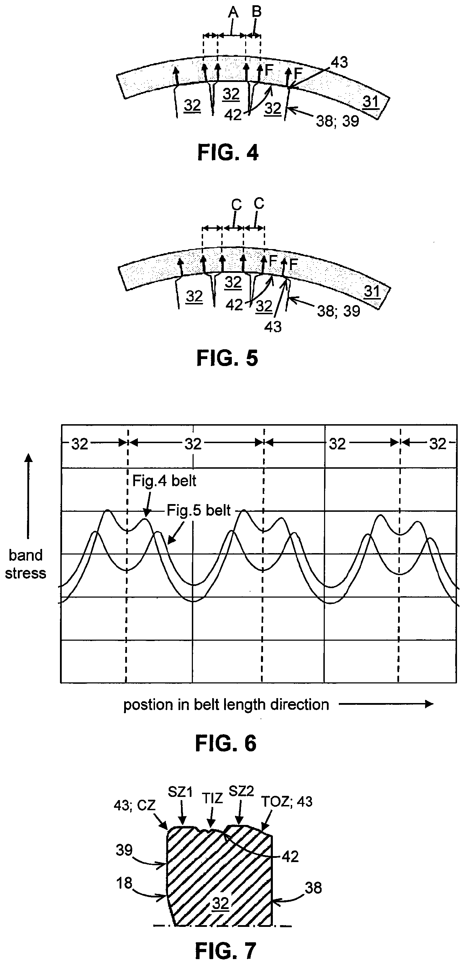

During operation of the transmission, the transverse elements 32 of the drive belt 3 are urged radially outward by the conical discs 4, 5 of the transmission pulleys 1, 2, such that they engage the band sets 31 via their bearing surfaces 42, as show in Fig. 4 along a cross-section A-A of the transverse element 32 indicated in Fig. 2. The contact forces F exerted by the transverse elements 32 in radial outward direction on the band sets 31 are concentrated at the edges of the bearing surfaces 42, where these bearing surfaces 42 link up with the respective main faces 38, 39 of the transverse element 32 via predominantly smoothly curved or slanted transitions 43. The individual bands of the band sets 31 are tensioned by such concentrated contact forces F.

In the known transverse element 32 the said transitions are of a relatively small dimension, such that for the individual transverse element 32 the said concentrated contact forces F are mutually separated in the length direction L of the drive belt 3 over a distance A that almost corresponds to a thickness dimension of the transverse element 32 in the length direction L of the drive belt 3. On the other hand, between two successive transverse elements 32 the said concentrated contact forces are mutually separated over a much smaller distance B (as a direct consequence of the large distance A).

Fig. 6 is a graph of the stress in the radially innermost band of the band set 31 in longitudinal direction for a section of the drive belt 3 that spans the thickness of approximately three (i.e. two whole and two halve) transverse elements 32 and that is located between the conical pulley discs 4, 5 of the transmission pulleys 1, 2. It can be seen in this Fig. 6 that the longitudinal band stress oscillates in the length direction L following a predominantly self-repeating pattern. Fig. 6 also shows that the said band stress spikes or peaks twice for each transverse element 32. The relative positions of these stress peaks essentially correspond to the locations of the bearing edges, i.e. of the edges of the bearing surface 42 of the transverse elements 32 where the said concentrated contact forces F occur. In the known transverse element 32 the said transitions are of a relatively small dimension, such that for the individual transverse element 32 the said concentrated contact forces F are mutually separated in the length direction L of the drive belt 3 over a distance A that almost corresponds to a thickness dimension of the transverse element 32 in the length direction L of the drive belt 3. On the other hand, between two successive transverse elements 32 the said concentrated contact forces are mutually separated over a much smaller distance B (as a result). In this respect it is noted that, in practice, a transverse element typically has a thickness of 1.5 to 2.0 mm and typically is provided with 0.3 mm wide transitions, such that for the known transverse element the distance B amounts to approximately 0.6 mm and distance A amounts to 0.9 mm or more.

According to the theoretical investigations leading up to the present invention the height of the stress peaks can be reduced by separating the locations of the said concentrated contact forces F more equally. Indeed, the line in Fig. 6 marked "Fig. 5 belt" represents the longitudinal stress in a section of the drive belt 3 corresponding to that of Fig. 4, however, provided with equally spaced, i.e. mutually equally separated, bearing edges, both for an individual transverse element and between two successive transverse elements in the drive belt. Fig. 6 clearly shows that, although on average the longitudinal stress is more or less the same between the known Fig. 4 belt and the Fig. 5 belt in accordance with the present invention, the maximum occurring stress level is significantly and favourably reduced in the novel belt of Fig. 5.

In the drive belt 3 according to the invention that is shown in Fig. 5, likewise along a cross-section A-A of the transverse element 32 indicated in Fig. 2, the said equal spacing of the (bearing) edges of the bearing surface 42 of the transverse elements 32 is realised by locating the bearing surface 42 centrally, relative to the thickness of the transverse element 32, and by providing the bearing surface 42 with a dimension in the belt's length direction L that effectively amounts to half the overall thickness of the transverse element 32 in that direction. In other words, in the novel drive belt 3 of Fig. 5, the said transitions between the bearing surface 42 and the respective main faces 38, 39 of the transverse element 32 extend for about one quarter of the (local) thickness of the transverse element 42. Thus, the said concentrated contact forces F are mutually separated in the length direction L of the drive belt 3 over a distance C that corresponds to half the thickness of the transverse element 32, or between 0,8 and 1,0 mm approximately, both for an individual transverse element and between two successive transverse elements in the drive belt.

Of course, the above relies on the assumption that an additional separation between the two successive transverse elements 32, in response to and in dependence on the longitudinal bending of the drive belt 3, is comparatively small, preferably negligible, in comparison with the said thickness of the transverse elements 32. Alternatively, this additional separation between the two successive transverse elements 32 is taken into account by making the said distance C correspond to half the thickness of the transverse element 32 plus half the said additional separation in the most tightly bend state of the drive belt 3.

The above-mentioned, in comparison with the known art and known transverse element, large(r) transitions can, for instance, be realised by applying a known deburring process after blanking more intensively, e.g. longer. In accordance with the present invention it is, however, also possible to adapt the process settings in the transverse element blanking. In particular by applying a (transverse) clearance between a cutter and a die of the blanking press of 10 to 15%, preferably 12 to 13% of the transverse element thickness the presently desired shape of the bearing surface 42 is obtained. With these process settings the bearing surface 42 is provided with a considerable contraction zone CZ, which contraction zone CZ is followed by -and forms the transition from the front main face 39 to- the bearing surface 42, in particular a first bearing edge thereof formed by a first sheared zone SZ1 essentially spanning the width of the bearing surface 42. After the first sheared zone SZ1, a tear-in zone TIZ follows that effectively forms a groove in the bearing surface 42 between the said first bearing edge (SZ1) and a second bearing edge (SZ2) of the bearing surface 42. Also this second bearing edge (SZ2) is formed by a sheared zone, i.e. a second sheared zone SZ2. However, this second sheared zone SZ2 will typically be constituted as a width-wise oriented string of isolated high spots rather than as a continuous surface part spanning the width of the bearing surface 42. Finally, a tear-off zone TOZ is provided that forms the transition from the bearing surface 42 to the rear main face 38. In Fig. 7 and in accordance with the invention, the said bearing edges SZ1, SZ2 of the bearing surface 42 are separated over a distance of about 60% of the thickness of the transverse element 32.

## Claims

1. Transverse element (32) for a drive belt (3) with an endless carrier (31) and a number of transverse elements (32) that are mounted on the endless carrier (31) in a slideable manner, in which transverse element (32) a cut-out (33) is provided for taking up the endless carrier (31), which cut-out (33) extends between a front main face (39) and a rear main face (38) of the transverse element (32) along the thickness thereof, whereof a radially outwardly oriented surface (42) of the transverse element (32) at the location of the cut-out (33) provides a bearing surface (42) for the endless carrier (31), which bearing surface (42) extends along the thickness of the transverse element (32) and on either end thereof is provided with bearing edges, across which bearing edge the endless carrier (31) is bent in the drive belt (3), **characterized in that** the bearing edges of the bearing surface (42) are mutually placed at a distance of 40 to 60% of the said thickness of the transverse element (32).

2. Transverse element (32) according to claim 1, **characterized in that** the bearing edges of the bearing surface (42) extend predominantly in parallel with the front main face (39) and/or the rear main face (38) of the transverse element (32).

3. Transverse element (32) according to claim 1 or 2, **characterized in that** the mutual distance between the bearing edges of the bearing surface (42) corresponds to half the said thickness of the transverse element (32).

4. Transverse element (32) according to claim 1, 2 or 3, **characterized in that** the bearing surface (42) extends in a predominantly flat plane between front main face (39) and the rear main face (38) of the transverse element (32).

5. Transverse element (32) according to claim 1, 2 or 3, **characterized in that** the bearing surface (42) is provided with a groove (TIZ) that extends between the bearing edges of the bearing surface (42) predominantly in parallel with the front main face (39) and/or the rear main face (38) of the transverse element (32).

6. Transverse element (32) according to one of the preceding claims, **characterized in that** at least one of the bearing edges of the bearing surface (42) is located at a distance of between 5 to 35% of the said thickness of the transverse element (32) from the front main face (39) or the rear main face (38) of the transverse element (32).

7. Transverse element (32) according to one of the preceding claims, **characterized in that** the bearing edges of the bearing surface (42) are located at a distance of a quarter of the said thickness of the transverse element (32) from the front main face (39) and the rear main face (38) of the transverse element (32) respectively.

8. Transverse element (32) according to one of the preceding claims, **characterized in that** in-between the bearing edges of the bearing surface (42) and, respectively, the front main face (39) and the rear main face (38) of the transverse element (32) curved or slanted transitions are provided that, in principle, do not arrive in contact with the endless carrier (31).

9. Transverse element (32) according to one of the preceding claims, **characterized in that** this transverse element (32) is part of a drive belt (3) with an endless carrier (31) and a number of transverse elements (32) that are mounted on the endless carrier (31) in a slideable manner.

10. Drive belt (3) with an endless carrier (31) and a number of transverse elements (32) according to one of the preceding claims that are mounted on the endless carrier (31) in a slideable manner.

## Patentansprüche

1. Querelement (32) für einen Antriebsriemen (3) mit einem Endlosträger (31) und einer Anzahl von Querelementen (32), die auf eine verschiebbare Weise an dem Endlosträger (31) befestigt sind, wobei in dem Querelement (32) ein Ausschnitt (33) zur Aufnahme des Endlosträgers (31) vorgesehen ist, wobei sich der Ausschnitt (33) zwischen einer vorderen Hauptfläche (39) und einer hinteren Hauptfläche (38) des Querelements (32) entlang der Dicke desselben erstreckt, wobei eine radial nach außen ausgerichtete Fläche (42) des Querelements (32) an der Stelle des Ausschnitts (33) eine Auflagefläche (42) für den Endlosträger (31) bereitstellt, wobei sich die Auflagefläche (42) entlang der Dicke des Querelements (32) und an jedem Ende derselben mit Auflagekanten versehen ist, wobei der Endlosträger (31) quer über die Auflagekante in dem Antriebsriemen (3) gebogen ist, **dadurch gekennzeichnet, dass** die Auflagekanten der Auflagefläche (42) gegenseitig in einem Abstand von 40% bis 60% der Dicke des Querelements (32) platziert sind.

2. Querelement (32) nach Anspruch 1, **dadurch gekennzeichnet, dass** sich die Auflagekanten der Auflagefläche (42) vorwiegend parallel zu der vorderen Hauptfläche (39) und/oder der hinteren Hauptfläche (38) des Querelements (32) erstrecken.

3. Querelement (32) nach Anspruch 1 oder 2, **dadurch gekennzeichnet, dass** der gegenseitige Abstand zwischen den Auflagekanten der Auflagefläche (42) der halben Dicke des Querelements (32) entspricht.

4. Querelement (32) nach Anspruch 1, 2 oder 3, **dadurch gekennzeichnet, dass** sich die Auflagefläche (42) in einer vorwiegend flachen Ebene zwischen der vorderen Hauptfläche (39) und der hinteren Hauptfläche (38) des Querelements (32) erstreckt.

5. Querelement (32) nach Anspruch 1, 2 oder 3, **dadurch gekennzeichnet, dass** die Auflagefläche (42) mit einer Nut (TIZ) versehen ist, die sich zwischen den Auflagekanten der Auflagefläche (42) vorwiegend parallel zu der vorderen Hauptfläche (39) und/oder der hinteren Hauptfläche (38) des Querelements (32) erstreckt.

6. Querelement (32) nach einem der vorhergehenden Ansprüche, **dadurch gekennzeichnet, dass** sich wenigstens eine der Auflagekanten der Auflagefläche (42) in einem Abstand von 5% bis 35% der Dicke des Querelements (32) von der vorderen Hauptfläche (39) oder der hinteren Hauptfläche (38) des Querelements (32) befindet.

7. Querelement (32) nach einem der vorhergehenden Ansprüche, **dadurch gekennzeichnet, dass** sich die Auflagekanten der Auflagefläche (42) in einem Abstand von einem Viertel der Dicke des Querelements (32) von der vorderen Hauptfläche (39) beziehungsweise der hinteren Hauptfläche (38) des Querelements (32) befinden.

8. Querelement (32) nach einem der vorhergehenden Ansprüche, **dadurch gekennzeichnet, dass** zwischen den Auflagekanten der Auflagefläche (42) beziehungsweise der vorderen Hauptfläche (39) und der hinteren Hauptfläche (38) des Querelements (32) gekrümmte oder schräge Übergänge vorgesehen sind, die im Prinzip nicht in Kontakt mit dem Endlosträger (31) gelangen.

9. Querelement (32) nach einem der vorhergehenden Ansprüche, **dadurch gekennzeichnet, dass** dieses Querelement (32) Teil eines Antriebsriemens (3) mit einem Endlosträger (31) und einer Anzahl von Querelementen (32) ist, die auf eine verschiebbare Weise an dem Endlosträger (31) befestigt sind.

10. Antriebsriemen (3) mit einem Endlosträger (31) und einer Anzahl von Querelementen (32) nach einem der vorhergehenden Ansprüche, die auf eine verschiebbare Weise an dem Endlosträger (31) befestigt sind.

## Revendications

1. Élément transversal (32) pour une courroie d'entraînement (3) ayant un support sans fin (31) et plusieurs éléments transversaux (32) qui sont montés sur le support sans fin (31) de façon coulissante, une découpe (33) étant pratiquée dans ledit élément transversal (32) pour recevoir le support sans fin (31), ladite découpe (33) s'étendant entre une face principale avant (39) et une face principale arrière (38) de l'élément transversal (32) le long de son épaisseur, une surface (42) orientée radialement vers l'extérieur de l'élément transversal (32) au niveau de l'emplacement de la découpe (33) fournissant une surface d'appui (42) pour le support sans fin (31), ladite surface d'appui (42) s'étendant le long de l'épaisseur de l'élément transversal (32) et à l'une de ses extrémités étant pourvue de bords d'appui, le support sans fin (31) étant plié dans la courroie d'entraînement (3), à travers ledit bord d'appui **caractérisé en ce que** les bords d'appui de la surface d'appui (42) sont placés mutuellement à une distance de 40 à 60 % de ladite épaisseur de l'élément transversal (32).

2. Élément transversal (32) selon la revendication 1, **caractérisé en ce que** les bords d'appui de la surface d'appui (42) s'étendent principalement parallèlement à la face principale avant (39) et/ou à la face principale arrière (38) de l'élément transversal (32).

3. Élément transversal (32) selon la revendication 1 ou 2, **caractérisé en ce que** la distance mutuelle entre les bords d'appui de la surface d'appui (42) correspond à la moitié de ladite épaisseur de l'élément transversal (32).

4. Élément transversal (32) selon la revendication 1, 2 ou 3, **caractérisé en ce que** la surface d'appui (42) s'étend dans un plan essentiellement plat entre la face principale avant (39) et la face principale arrière (38) de l'élément transversal (32).

5. Élément transversal (32) selon la revendication 1, 2 ou 3, **caractérisé en ce que** la surface d'appui (42) est munie d'une rainure (TIZ) qui s'étend entre les bords d'appui de la surface d'appui (42) principalement parallèlement à la face principale avant (39) et/ou à la face principale arrière (38) de l'élément transversal (32).

6. Élément transversal (32) selon l'une des revendications précédentes, **caractérisé en ce qu'**au moins l'un des bords d'appui de la surface d'appui (42) est situé à une distance comprise entre 5 et 35 % de ladite épaisseur de l'élément transversal (32) à partir de la face principale avant (39) ou de la face principale arrière (38) de l'élément transversal (32).

7. Élément transversal (32) selon l'une des revendications précédentes, **caractérisé en ce que** les bords d'appui de la surface d'appui (42) sont situés à une distance d'un quart de ladite épaisseur de l'élément transversal (32) respectivement à partir de la face principale avant (39) et de la face principale arrière (38) de l'élément transversal (32).

8. Élément transversal (32) selon l'une des revendications précédentes, **caractérisé en ce qu'**il est fourni entre les bords d'appui de la surface d'appui (42) et, respectivement, la face principale avant (39) et la face principale arrière (38) de l'élément transversal (32) des transitions courbes ou inclinées qui, en principe, n'entrent pas en contact avec le support sans fin (31).

9. Élément transversal (32) selon l'une des revendications précédentes, **caractérisé en ce que** cet élément transversal (32) fait partie d'une courroie d'entraînement (3) ayant un support sans fin (31) et plusieurs éléments transversaux (32) qui sont montés sur le support sans fin (31) de manière coulissante.

10. Courroie d'entraînement (3) ayant un support sans fin (31) et plusieurs éléments transversaux (32) selon l'une des revendications précédentes qui sont montés sur le support sans fin (31) de manière coulissante.
